# EUROPEAN PATENT APPLICATION

(11) **EP 4 299 529 A1**
(43) Date of publication of application: **03.01.2024**
(21) Application number: 22759305.0
(22) Date of filing: 02.02.2022
(51) Int. Cl.: C01G 53/00, H01M 4/505, H01M 4/525

(54) **POSITIVE ELECTRODE ACTIVE MATERIAL FOR NON-AQUEOUS ELECTROLYTE SECONDARY BATTERIES, AND NON-AQUEOUS ELECTROLYTE SECONDARY BATTERY**

(30) Priority: 26.02.2021 JP 2021029996
(71) Applicant: Panasonic Intellectual Property Management Co., Ltd., Osaka 571-0057 (JP)
(72) Inventor: ESAKI, Shogo, Kadoma-shi, Osaka 571-0057 (JP); NATSUI, Ryuichi, Kadoma-shi, Osaka 571-0057 (JP); MATSUSHITA, Junko, Kadoma-shi, Osaka 571-0057 (JP); HIBINO, Mitsuhiro, Kadoma-shi, Osaka 571-0057 (JP); NAKURA, Kensuke, Kadoma-shi, Osaka 571-0057 (JP)
(74) Representative: Novagraaf International SA
(86) International application number: PCT/JP2022/003931
(87) International publication number: WO 2022/181264

(57) **Abstract**

The positive electrode active material for non-aqueous electrolyte secondary batteries which is an example of one embodiment includes a lithium-transition metal composite oxide represented by the compositional formula LixMnyNizSiaMfO2-αFα (in the formula, M is at least one element selected from Na, K, Mg, Ca, Sr, Ba, Sc, Y, La, Ce, Pr, Nd, Sm, Eu, Gd, Tb, Dy, Ho, Er, Tm, Yb, Lu, Ge, Sn, Pb, Sc, Ti, V, Cr, Fe, Co, Cu, Zn, Ru, Rh, Re, Pd, Ir, Ag, Bi, Sb, B, Al, Ga, In, P, Zr, Hf, Nb, Mo, and W, x+y+z+a+f≤2+A, 1.0<x≤1.2, 0.4≤y≤0.8, 0≤z≤0.4, 0<a≤0.03, 0≤f≤0.05, 0<α≤0.1, 0≤A≤0.03).

## Description

### TECHNICAL FIELD

The present disclosure relates to a positive electrode active material for non-aqueous electrolyte secondary batteries, and a non-aqueous electrolyte secondary battery in which the positive electrode active material is used.

### BACKGROUND ART

In a non-aqueous electrolyte secondary battery such as a lithium ion battery, the positive electrode active material greatly affects battery performance including input/output characteristics, capacity, and durability. As a positive electrode active material, a lithium-transition metal composite oxide is generally used that contains a metal element such as Ni, Co, Mn, or Al. The kind and the amount of the element added to the lithium-transition metal composite oxide greatly affect battery performance. For example, intended performance may be unrealized if the kind or the amount of the element added changes even slightly. Therefore, many studies have been conducted on the kind and the amount of an added element in a lithium-transition metal composite oxide.

For example, Patent Literature 1 discloses a positive electrode active material including a nickel-based lithium composite metal oxide single particle and including greater than or equal to 2500 and less than or equal to 6000 ppm of a metal (greater than or equal to one selected from the group consisting of Al, Ti, Mg, Zr, W, Y, Sr, Co, F, Si, Mg, Na, Cu, Fe, Ca, S, and B) doped in a crystal lattice of the single particle. Patent Literature 2 discloses a positive electrode active material having a composition formula of LiₓNi_{1-y}Co_{y-z}M_{z}O₂₋ₐX_{b} (M is single Al or includes Al as an essential element and greater than or equal to one element selected from elements of Groups 13 and 14 of the periodic table, Mn, Fe, Ti, Zr, Nd, La, Cu, V, Sm, W, Zn, Y, Mg, Sr, Ca, Ba, Cs, Na, and P, and X is a halogen element).

### CITATION LIST

### PATENT LITERATURE

Patent Literature 1: JP 2020-520539 A
Patent Literature 2: JP 4197002 B

### SUMMARY

### TECHNICAL PROBLEM

Lithium-rich lithium-transition metal composite oxides having a molar ratio of Li to the transition metal of greater than 1 are expected as a next-generation positive electrode active material having a high capacity, but have a problem of easy elution of the transition metal. Adding F to a lithium-rich composite oxide is known to suppress elution of a transition metal and thus improve durability, but further improvement in durability is awaited.

An object of the present disclosure is to provide a positive electrode active material including a lithium-rich lithium-transition metal composite oxide, having a high capacity, and being capable of improving durability of a battery.

### SOLUTION TO PROBLEM

A positive electrode active material for non-aqueous electrolyte secondary batteries as an aspect of the present disclosure includes a lithium-transition metal composite oxide having a composition formula of LiₓMn_{y}Ni_{z}SiₐM_{f}O_{2-α}F_{α} in which M is at least one element selected from Na, K, Mg, Ca, Sr, Ba, Sc, Y, La, Ce, Pr, Nd, Sm, Eu, Gd, Tb, Dy, Ho, Er, Tm, Yb, Lu, Ge, Sn, Pb, Sc, Ti, V, Cr, Fe, Co, Cu, Zn, Ru, Rh, Re, Pd, Ir, Ag, Bi, Sb, B, Al, Ga, In, P, Zr, Hf, Nb, Mo, and W, and x + y + z + a + f ≤ 2 + A, 1.0 < x ≤ 1.2, 0.4 ≤ y ≤ 0.8, 0 ≤ z ≤ 0.4, 0 < a ≤ 0.03, 0 ≤ f ≤ 0.05, 0 < α ≤ 0.1, and 0 ≤ A ≤ 0.03 are satisfied.

A non-aqueous electrolyte secondary battery as an aspect of the present disclosure includes a positive electrode including the above-described positive electrode active material, a negative electrode, a separator interposed between the positive electrode and the negative electrode, and a non-aqueous electrolyte.

### ADVANTAGEOUS EFFECTS OF INVENTION

According to the positive electrode active material as an aspect of the present disclosure, cycle characteristics of a battery are improved, and durability can be improved.

### BRIEF DESCRIPTION OF DRAWING

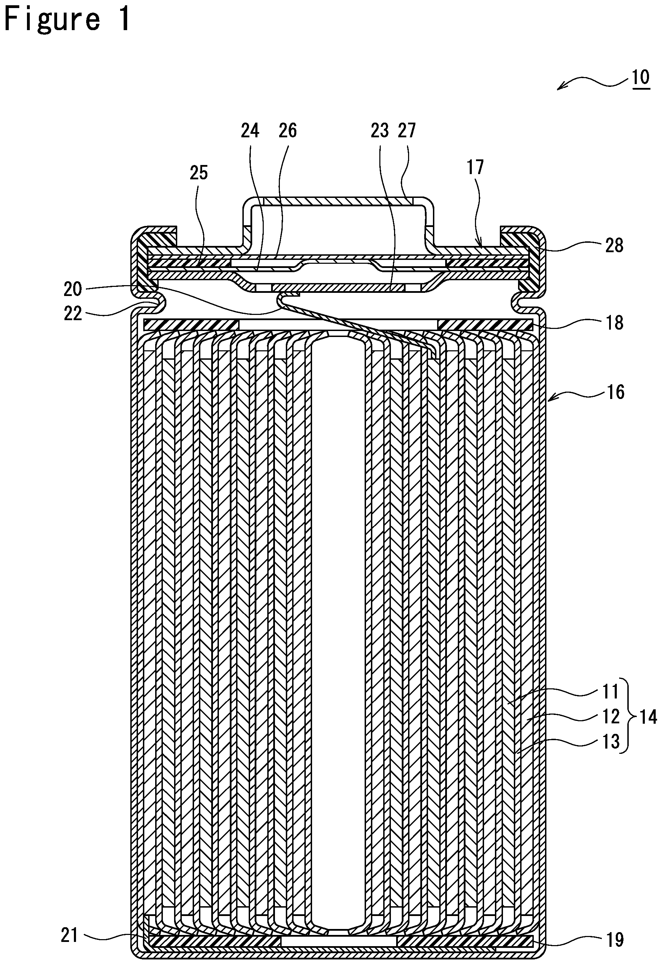

FIG. 1 is a sectional view of a non-aqueous electrolyte secondary battery as an example of an embodiment.

### DESCRIPTION OF EMBODIMENTS

As described above, in the case of adding F to a lithium-rich lithium-transition metal composite oxide, elution of the transition metal is suppressed, and durability of a battery is improved, but further improvement in durability is required. As a result of intensive studies to solve this problem, the present inventors have found that durability of a battery is specifically improved by adding Si to a lithium-rich F-containing composite oxide containing at least Mn as a transition metal. It has been found that the durability is more remarkably improved particularly in the case of adding Si and a specific element M, and preferably adding Si and greater than or equal to two kinds of elements M.

Hereinafter, an example of an embodiment of a positive electrode active material for non-aqueous electrolyte secondary batteries according to the present disclosure and an example of an embodiment of a non-aqueous electrolyte secondary battery in which the positive electrode active material is used will be described in detail with reference to the drawing. It is assumed from the beginning to selectively combine a plurality of embodiments and modifications described below.

Hereinafter, a cylindrical battery in which a wound electrode assembly 14 is housed in a bottomed cylindrical exterior housing can 16 will be shown as an example, but the exterior housing body is not limited to a cylindrical exterior housing can, and may be, for example, a square exterior housing can (square battery), a coin-shaped exterior housing can (coin-shaped battery), or an exterior housing body formed of a laminate sheet including a metal layer and a resin layer (laminated battery). The electrode assembly is not limited to a wound electrode assembly, and may be a stacked electrode assembly in which a plurality of positive electrodes and a plurality of negative electrodes are alternately stacked with a separator interposed therebetween.

FIG. 1 is a sectional view of a non-aqueous electrolyte secondary battery 10 as an example of an embodiment. As shown in FIG. 1, the non-aqueous electrolyte secondary battery 10 includes a wound electrode assembly 14, a non-aqueous electrolyte, and an exterior housing can 16 that houses the electrode assembly 14 and the non-aqueous electrolyte. The electrode assembly 14 includes a positive electrode 11, a negative electrode 12, and a separator 13, and has a wound structure in which the positive electrode 11 and the negative electrode 12 are spirally wound with the separator 13 interposed therebetween. The exterior housing can 16 is a bottomed cylindrical metal container that is open at one side in the axial direction, and an opening of the exterior housing can 16 is sealed by a sealing assembly 17. Hereinafter, for convenience of description, the sealing assembly 17 side of the battery is referred to as an upper side, and the bottom side of the exterior housing can 16 is referred to as a lower side.

The non-aqueous electrolyte includes a non-aqueous solvent and an electrolyte salt dissolved in the non-aqueous solvent. As the non-aqueous solvent, for example, esters, ethers, nitriles, amides, and mixed solvents of greater than or equal to two of them are used. The non-aqueous solvent may contain a halogen-substituted product in which at least a part of hydrogen in a solvent described above is substituted with a halogen atom such as fluorine. Examples of the non-aqueous solvent include ethylene carbonate (EC), ethyl methyl carbonate (EMC), dimethyl carbonate (DMC), and mixed solvents of them. As the electrolyte salt, for example, a lithium salt such as LiPF₆ is used. The non-aqueous electrolyte is not limited to a liquid electrolyte, and may be a solid electrolyte.

All of the positive electrode 11, the negative electrode 12, and the separator 13 included in the electrode assembly 14 are a band shaped long body, and spirally wound and thus alternatively stacked in a radial direction of the electrode assembly 14. The negative electrode 12 is formed into a size larger than that of the positive electrode 11 in order to prevent precipitation of lithium. That is, the negative electrode 12 is formed to be longer than the positive electrode 11 in the longitudinal direction and the width direction (lateral direction). The separator 13 is formed into a size larger than that of at least the positive electrode 11, and for example, two separators are disposed so as to sandwich the positive electrode 11. The electrode assembly 14 includes a positive electrode lead 20 connected to the positive electrode 11 by welding or the like, and a negative electrode lead 21 connected to the negative electrode 12 by welding or the like.

Insulating plates 18 and 19 are disposed above and below the electrode assembly 14, respectively. In the example shown in FIG. 1, the positive electrode lead 20 extends to the sealing assembly 17 side through a through hole of the insulating plate 18, and the negative electrode lead 21 extends to the bottom side of the exterior housing can 16 through the outside of the insulating plate 19. The positive electrode lead 20 is connected to the lower surface of an internal terminal plate 23 of the sealing assembly 17 by welding or the like, and a cap 27, which is electrically connected to the internal terminal plate 23 and is the top plate of the sealing assembly 17, serves as a positive electrode terminal. The negative electrode lead 21 is connected to the bottom inner surface of the exterior housing can 16 by welding or the like, and the exterior housing can 16 serves as a negative electrode terminal.

A gasket 28 is provided between the exterior housing can 16 and the sealing assembly 17 to ensure the sealability inside the battery. In the exterior housing can 16, a groove portion 22 is formed in which a part of the side surface of the exterior housing can 16 protrudes inward to support the sealing assembly 17. The groove portion 22 is preferably formed in an annular shape along the circumferential direction of the exterior housing can 16, and supports the sealing assembly 17 on its upper surface. The sealing assembly 17 is fixed to an upper portion of the exterior housing can 16 by the groove portion 22 and the opening end, of the exterior housing can 16, swaged to the sealing assembly 17.

The sealing assembly 17 has a structure in which the internal terminal plate 23, a lower vent member 24, an insulating member 25, an upper vent member 26, and the cap 27 are sequentially stacked from the electrode assembly 14 side. Each member included in the sealing assembly 17 has, for example, a disk shape or a ring shape, and the members excluding the insulating member 25 are electrically connected to each other. The lower vent member 24 and the upper vent member 26 are connected to each other at their central portions, and the insulating member 25 is interposed between the circumferential portions of the lower vent member 24 and the upper vent member 26. When the internal pressure of the battery increases due to abnormal heat generation, the lower vent member 24 deforms so as to push the upper vent member 26 up toward the cap 27 side and breaks, and thus the current pathway between the lower vent member 24 and the upper vent member 26 is cut off. When the internal pressure further increases, the upper vent member 26 breaks, and gas is discharged from an opening of the cap 27.

Hereinafter, the positive electrode 11, the negative electrode 12, and the separator 13 included in the electrode assembly 14, in particular, the positive electrode active material included in the positive electrode 11 will be described in detail.

### [Positive Electrode]

The positive electrode 11 includes a positive electrode core and a positive electrode mixture layer provided on a surface of the positive electrode core. As the positive electrode core, a foil of a metal, such as aluminum or an aluminum alloy, that is stable in a potential range of the positive electrode 11, a film in which the metal is disposed on its surface layer, or the like can be used. The positive electrode mixture layer includes a positive electrode active material, a conductive agent, and a binder, and is preferably provided on both surfaces of the positive electrode core. The positive electrode 11 can be produced by, for example, applying a positive electrode mixture slurry including a positive electrode active material, a conductive agent, a binder, and the like onto a positive electrode core, drying the applied film, and then compressing the film to form a positive electrode mixture layer on both surfaces of the positive electrode core.

Examples of the conductive agent included in the positive electrode mixture layer include carbon materials such as carbon black, acetylene black, Ketjenblack, and graphite. Examples of the binder included in the positive electrode mixture layer include fluororesins such as polytetrafluoroethylene (PTFE) and polyvinylidene fluoride (PVdF), polyacrylonitrile (PAN), polyimide resins, acrylic resins, and polyolefin resins. These resins may be used in combination with a cellulose derivative such as carboxymethyl cellulose (CMC) or its salt, polyethylene oxide (PEO), or the like.

The positive electrode active material includes a lithium-transition metal composite oxide having a composition formula of LiₓMn_{y}Ni_{z}SiₐM_{f}O_{2-α}F_{α} in which M is at least one element selected from Na, K, Mg, Ca, Sr, Ba, Sc, Y, La, Ce, Pr, Nd, Sm, Eu, Gd, Tb, Dy, Ho, Er, Tm, Yb, Lu, Ge, Sn, Pb, Sc, Ti, V, Cr, Fe, Co, Cu, Zn, Ru, Rh, Re, Pd, Ir, Ag, Bi, Sb, B, Al, Ga, In, P, Zr, Hf, Nb, Mo, and W, and x + y + z + a + b ≤ 2 + A, 1.0 < x ≤ 1.2, 0.4 ≤ y ≤ 0.8, 0 ≤ z ≤ 0.4, 0 < a ≤ 0.03, 0 ≤ f ≤ 0.05, 0 < α ≤ 0.1, and 0 ≤ A ≤ 0.03 are satisfied. The composite oxide is a Li-rich material containing Li, Mn, Si, and F as essential elements and having a molar ratio of Li to the transition metals of greater than 1, and is a composite oxide in which a predetermined amount of fluoride ions is introduced and a part of O is substituted with F.

The positive electrode active material includes the composite oxide having the above-described composition formula as a main component. Here, the main component means a component contained at the highest mass ratio among the components contained in the composite oxide. In the mixture layer of the positive electrode 11, a composite oxide other than the composite oxide having the above-described composition formula (such as a composite oxide that is not a Li-rich composite oxide or a composite compound containing no fluoride ion) may be used in combination as a positive electrode active material, but the content of the composite oxide having the above-described composition formula is preferably greater than or equal to 50 mass%, and may be substantially 100 mass%. The composition of the composite oxide can be measured using an ICP emission spectroscopic analysis device (iCAP 6300 manufactured by Thermo Fisher Scientific Inc.).

The lithium-transition metal composite oxide having the above-described composition formula preferably contains Ni in addition to Li, Mn, and Si. Ni contributes to increasing capacity. If Si is added to the lithium-transition metal composite oxide having the above-described composition formula and preferably containing Ni, the durability of the battery is improved, and more effectively improved in a case where the element M is present together with Si. Therefore, the composite oxide preferably contains at least one kind of element M selected from Na, K, Mg, Ca, Sr, Ba, Sc, Y, La, Ce, Pr, Nd, Sm, Eu, Gd, Tb, Dy, Ho, Er, Tm, Yb, Lu, Ge, Sn, Pb, Sc, Ti, V, Cr, Fe, Co, Cu, Zn, Ru, Rh, Re, Pd, Ir, Ag, Bi, Sb, B, Al, Ga, In, P, Zr, Hf, Nb, Mo, and W as an essential element.

In the composition formula of LiₓMn_{y}Ni_{z}SiₐM_{f}O_{2-α}F_{α}, the element M is preferably at least two elements selected from Na, K, Mg, Ca, Sr, Ba, Sc, Y, La, Ce, Pr, Nd, Sm, Eu, Gd, Tb, Dy, Ho, Er, Tm, Yb, Lu, Ge, Sn, Pb, Sc, Ti, V, Cr, Fe, Co, Cu, Zn, Ru, Rh, Re, Pd, Ir, Ag, Bi, Sb, B, Al, Ga, In, P, Zr, Hf, Nb, Mo, and W. Among them, at least two elements selected from Al, P, Sb, Sr, Ti, Mg, and Nb are preferable. Adding greater than or equal to two kinds of elements M makes the effect of improving durability more remarkable. In a case where greater than or equal to two kinds of elements M are contained, the molar ratio of the sum of the elements M is less than or equal to 0.05 (0 < f ≤ 0.05).

The lithium-transition metal composite oxide having the above-described composition formula preferably contains greater than or equal to three kinds of elements as the element M. Adding Si and greater than or equal to three kinds of elements M to the lithium-transition metal composite oxide containing Mn, Ni, and F makes the effect of improving durability more remarkable. The number of kinds of elements M contained at a content of, for example, greater than or equal to 0.2 mol% based on the total molar amount of Li, Mn, Ni, Si, and the elements M (x + y + z + a + f) may be greater than or equal to 4, and is preferably greater than or equal to 1 and less than or equal to 3, more preferably 2 or 3, and particularly preferably 3.

The lithium-transition metal composite oxide may contain substantially no Co because Co is particularly rare and expensive, and the lithium-transition metal composite oxide preferably contains substantially no Co in consideration of manufacturing cost and the like. According to the lithium-transition metal composite oxide having the above-described composition formula, even in the case of using an element M other than Co instead of Co, a durability-improving effect can be obtained that is greater than or equal to that in the case of using Co.

In the composition formula of LiₓMn_{y}Ni_{z}SiₐM_{f}O_{2-α}F_{α}, the molar ratio of Li (x) satisfies 1.0 < x ≤ 1.2, preferably 1.1 ≤ x ≤ 1.2. The molar ratio of Mn (y) satisfies 0.4 ≤ y ≤ 0.8, preferably 0.45 ≤ y ≤ 0.60. If the molar ratios of Li and Mn are within the above ranges, both high durability and high capacity are easily achieved. Ni is an optional component, and is, for example, preferably contained in a smaller amount than Mn. From the viewpoint of achieving both high durability and high capacity, the preferred content (molar ratio) of Ni is 0.05 ≤ z ≤ 0.3.

In the composition formula of LiₓMn_{y}Ni_{z}SiₐM_{f}O_{2-α}F_{α}, the total molar amount of Li, Mn, Ni, Si, and the element M (x + y + z + a + f) is less than or equal to 2 + A, and A is less than or equal to 0.03. Mn, Ni, Si, and the element M are present in an octahedral site of the crystal structure of the composite oxide, but Si may be partially also in a tetrahedral site of the crystal structure. In this case, the total molar amount (x + y + z + a + f) is estimated to be greater than 2. The composite oxide of the present embodiment is, for example, a Li-rich composite oxide, and is not a cation-rich composite oxide. Alternatively, the composite oxide is a Li-rich and cation-rich composite oxide. The molar ratio of F (α) is less than or equal to 0.1 (0 < α ≤ 0.1), and preferably satisfies 0.05 ≤ α ≤ 0.085. If the content of F is within the above range, elution of the transition metal can be sufficiently suppressed while a high capacity is ensured, and F contained at such a content contributes to improvement in durability.

In the composition formula of LiₓMn_{y}Ni_{z}SiₐM_{f}O_{2-α}F_{α}, the molar ratio of Si (a) is less than or equal to 0.03 (0 < a ≤ 0.03), and preferably satisfies 0.002 ≤ a ≤ 0.015, 0.002 ≤ a ≤ 0.010, or 0.002 ≤ a ≤ 0.005. Although even a small amount of Si contributes to improvement in durability, the effect of improving durability is more remarkable in a case where Si is present at a content of greater than or equal to 0.2 mol% based on the total molar number of elements other than Li, O, and F. Meanwhile, even if the content of Si is excessively increased, the effect of improving durability is limited, and other battery performance such as capacity may be affected. Therefore, in order to efficiently and effectively improve durability, the upper limit of the content is preferably set to 1.5 mol%, 1 mol%, or 0.5 mol%.

In the composition formula of LiₓMn_{y}Ni_{z}SiₐM_{f}O_{2-α}F_{α}, the molar ratio of the element M (f) is preferably less than or equal to 0.05 (0 < f ≤ 0.05), and more preferably less than or equal to 0.04 (0 < f ≤ 0.04), or less than or equal to 0.03 (0 < f ≤ 0.03). In a case where a plurality of kinds of elements M are contained, the molar ratio of the sum of the elements M is less than or equal to 0.05 as described above. In this case, the durability can be more efficiently improved. In a case where a plurality of kinds of elements M are contained, the molar ratio of each element M somewhat depends on the kind of the element, but is preferably less than or equal to 0.015, less than or equal to 0.01, or less than or equal to 0.005. Although even a small amount of the element M contributes to improvement in durability when added together with Si, the effect of improving durability is more remarkable in a case where the element M is present at a content of greater than or equal to 0.2 mol% based on the total molar number of elements other than Li, O, and F.

In the lithium-transition metal composite oxide having the above-described composition formula, the ratio (molar ratio) between the contents of Si and the element M is not particularly limited, but the preferred ratio somewhat depends on, for example, the kind of the element M. The molar ratio between Si and each element M may be, for example, substantially the same. In a case where greater than or equal to two kinds of elements M are contained, the total molar number of the elements M is preferably larger than the molar number of Si. In a case where Al is contained as the element M, for example, the molar number of Al is set to be greater than or equal to the molar number of Si, and set to be greater than the molar number of an element M other than Al. The lithium-transition metal composite oxide may contain an element, other than Li, Mn, Ni, Si, the element M, O, and F, as long as an object of the present disclosure is not impaired.

The lithium-transition metal composite oxide is, for example, a secondary particle including a plurality of primary particles that are aggregated. The volume-based median size (D50) of the lithium-transition metal composite oxide is, for example, greater than or equal to 1 and less than or equal to 20 µm, or greater than or equal to 2 and less than or equal to 15 µm. D50 is a particle size at which the volume integrated value is 50% in a particle size distribution measured with a laser diffraction scattering method. The lithium-transition metal composite oxide has a BET specific surface area of, for example, greater than or equal to 1.0 and less than or equal to 4.0 mm²/g. If the BET specific surface area is within the above range, both high durability and high capacity are easily achieved. The BET specific surface area is measured in accordance with the BET method (nitrogen adsorption method) described in JIS R 1626.

The lithium-transition metal composite oxide having the above-described composition formula can be synthesized by, for example, mixing a carbonate containing Mn and Ni, a compound containing Si, a compound containing the element M, lithium carbonate (Li₂CO₃), and lithium fluoride (LiF) and firing the mixture. The firing conditions are, for example, a firing temperature of greater than or equal to 700 and less than or equal to 900°C and a firing time of greater than or equal to 10 and less than or equal to 30 hours. The compound containing Si may be added to a fired product obtained by mixing and firing other components. In this case, Si is likely to be present particularly on the particle surface of the lithium-transition metal composite oxide. Examples of the compound containing Si include silicon oxide. Examples of the compound containing the element M include aluminum oxide, strontium oxide, diantimony trioxide, niobium oxide, magnesium oxide, titanium oxide, germanium oxide, diphosphorus pentoxide, and lithium phosphate. However, not only these starting materials but also other starting materials can be used to synthesize the target compound.

As described above, the positive electrode active material includes the lithium-transition metal composite oxide having the composition formula of LiₓMn_{y}Ni_{z}SiₐM_{f}O_{2-α}F_{α} as a main component. The composite oxide preferably contains Ni and the element M as essential elements. The element M is preferably greater than or equal to two elements selected from Al, P, Sb, Sr, Ti, Mg, and Nb. The preferred range of the content of Si is, for example, greater than or equal to 0.2 and less than or equal to 1 mol%, and the preferred range of the total content of the element M is, for example, greater than or equal to 0.2 and less than or equal to 3 mol%, based on the total molar number of elements other than Li, O, and F.

### [Negative Electrode]

The negative electrode 12 includes a negative electrode core and a negative electrode mixture layer provided on a surface of the negative electrode core. As the negative electrode core, a foil of a metal, such as copper, that is stable in a potential range of the negative electrode 12, a film in which the metal is disposed on its surface layer, or the like can be used. The negative electrode mixture layer includes a negative electrode active material and a binder, and is preferably provided on both surfaces of the negative electrode core. The negative electrode 12 can be produced by, for example, applying a negative electrode mixture slurry including a negative electrode active material, a conductive agent, a binder, and the like to a surface of a negative electrode core, drying the applied film, and then compressing the film to form a negative electrode mixture layer on both surfaces of the negative electrode core.

The negative electrode mixture layer includes, for example, a carbon-based active material that reversibly occludes and releases lithium ions as a negative electrode active material. Preferred carbon-based active materials are graphite such as natural graphite such as flake graphite, massive graphite, and amorphous graphite and artificial graphite such as massive artificial graphite (MAG) and graphitized mesophase-carbon microbead (MCMB). As the negative electrode active material, a Si-based active material including at least one of Si or a Si-containing compound may be used, or a carbon-based active material and a Si-based active material may be used in combination.

As the conductive agent included in the negative electrode mixture layer, carbon materials such as carbon black, acetylene black, Ketjenblack, and graphite can be used as in the case of the positive electrode 11. As the binder included in the negative electrode mixture layer, fluororesins, PAN, polyimides, acrylic resins, polyolefins, and the like can be used as in the case of the positive electrode 11, but styrene-butadiene rubber (SBR) is preferably used. The negative electrode mixture layer preferably further includes CMC or its salt, polyacrylic acid (PAA) or its salt, polyvinyl alcohol (PVA), or the like. Among them, CMC or its salt, or PAA or its salt is preferably used in combination with SBR.

### [Separator]

As the separator 13, a porous sheet having an ion permeation property and an insulating property is used. Specific examples of the porous sheet include fine porous thin films, woven fabrics, and nonwoven fabrics. As a material of the separator 13, polyolefins such as polyethylene, polypropylene, and copolymers of ethylene and an α olefin, cellulose, and the like are preferred. The separator 13 may have a single-layered structure or a multilayered structure. A heat resistant layer including inorganic particles, a heat resistant layer including a resin having high heat resistance such as an aramid resin, a polyimide, or polyamideimide, or the like may be formed on the surface of the separator 13.

### EXAMPLES

Hereinafter, the present disclosure will be further described with reference to Examples. The present disclosure, however, is not limited to these Examples.

### <Example 1>

### [Synthesis of Lithium-Transition Metal Composite Oxide]

A carbonate containing Mn and Ni at a molar ratio of 2 : 1, silicon oxide, lithium carbonate, and lithium fluoride were mixed, and the mixture was fired in air at 800°C for 20 hours to obtain a lithium-transition metal composite oxide having a composition formula of Li_{1.167}Mn_{0.550}Ni_{0.275}Si_{0.008}O_{1.958}F_{0.042}.

### [Production of Positive Electrode]

As a positive electrode active material, the lithium-transition metal composite oxide was used. The positive electrode active material, acetylene black, and polyvinylidene fluoride were mixed at a solid content mass ratio of 7 : 2 : 1, and N-methyl-2-pyrrolidone (NMP) was used as a dispersion medium to prepare a positive electrode mixture slurry. Next, the positive electrode mixture slurry was applied onto a positive electrode core formed of an aluminum foil, the applied film was dried and compressed, and then the resulting product was cut into a predetermined electrode size to obtain a positive electrode.

### [Preparation of Non-aqueous Electrolyte Liquid]

Ethylene carbonate (EC), ethyl methyl carbonate (EMC), and dimethyl carbonate (DMC) were mixed at a predetermined volume ratio. To the resulting mixed solvent, LiPF₆ was added to obtain a non-aqueous electrolyte liquid.

### [Production of Test Cell]

The positive electrode and a negative electrode formed of a lithium metal foil were disposed to face each other with a separator interposed therebetween to form an electrode assembly, and the electrode assembly was housed in a coin-shaped exterior housing can. The non-aqueous electrolyte liquid was injected into the exterior housing can, and then the exterior housing can was sealed to obtain a coin-shaped test cell (non-aqueous electrolyte secondary battery).

### <Examples 2 to 13 and Comparative Examples 3 to 12>

A test cell was produced in the same manner as in Example 1 except that in synthesis of the lithium-transition metal composite oxide, a compound containing the element M was mixed so that the contents of Si and the element M were as shown in Table 1 and that the kind of a raw material and the mixing ratio of the raw materials were appropriately changed (so that the contents of Li, Ni, Mn, O, and F were the same as in Example 1). Oxides were used as compounds containing Al, Co, P, Sb, Sr, Ti, Mg, and Nb, respectively.

### <Comparative Example 1>

A test cell was produced in the same manner as in Example 1 except that in synthesis of the lithium-transition metal composite oxide, no silicon oxide was added.

### <Comparative Example 2>

A test cell was produced in the same manner as in Example 1 except that in synthesis of the lithium-transition metal composite oxide, no silicon oxide and no lithium fluoride were added.

The capacity maintenance rate of each test cell in Examples and Comparative Examples was evaluated with the following method. The evaluation results are shown in Table 1 together with the contents of Si and the element M in the positive electrode active material.

### [Evaluation of Capacity Maintenance Rate]

The capacity maintenance rate was calculated with the following formula from the discharged energy E1 (initial discharged energy) after 1 cycle and the discharged energy E22 after 22 cycles in the following cycle test.

### Capacity maintenance rate = (E22/E1)

### <Cycle Test>

The test cell was charged at a constant current of 0.05 C under a temperature environment of 25°C until the battery voltage reached 4.7 V, charged at a constant voltage of 4.7 V until the current value reached 0.025 C (1), then rested for 20 minutes (2), subsequently discharged at a constant current of 0.05 C until the battery voltage reached 2.5 V (3), and finally rested for 20 minutes (4). The steps (1) to (4) were regarded as 1 cycle of charge-discharge cycle, and repeated 22 times.

**[Table 1]**

| | Added element | Amount of Ti and M added (mol%) | | Capacity maintenance rate | Note |
|---|---|---|---|---|---|
| | | Si | Co | | |
| Example 1 | Si | 1.0 | | 0.921 | |
| Example 2 | Si | 0.25 | | 0.928 | |
| Comparative Example 1 | - | | | 0.915 | |
| Comparative Example 2 | - | | | 0.914 | No F is contained |
| Comparative Example 3 | Co | | 1.0 | 0.920 | |
| Comparative Example 4 | Co | | 0.25 | 0.912 | |

**[Table 2]**

| | Added element | Amount of Ti and M added (mol%) | | | | Capacity maintenance rate |
|---|---|---|---|---|---|---|
| | | Si | Al | Sb | P | |
| Example 3 | SiAl | 1.0 | 1.0 | | | 0.931 |
| Example 4 | SiP | 0.25 | | | 0.25 | 0.929 |
| Example 5 | SiAl | 0.25 | 1.0 | | | 0.929 |
| Example 6 | SiAl | 0.50 | 0.50 | | | 0.929 |
| Example 7 | SiAl | 0.50 | 0.25 | | | 0.927 |
| Example 8 | SiSb | 0.25 | | 0.25 | | 0.927 |
| Comparative Example 5 | AlP | | 0.25 | | 0.25 | 0.909 |
| Comparative Example 6 | AlSb | | 0.25 | 0.8 | | 0.906 |

**[Table 3]**

| | Added element | Amount of Ti and M added (mol%) | | | | | | | Capacity maintenance rate |
|---|---|---|---|---|---|---|---|---|---|
| | | Si | Al | Sr | Sb | Nb | P | Ti | |
| Example 9 | SiSrTi | 0.25 | | 0.25 | | | | 0.25 | 0.935 |
| Example 10 | SiSrTi | 0.50 | | 0.25 | | | | 0.25 | 0.932 |
| Example 11 | SiAlSb | 0.25 | 0.25 | | 0.25 | | | | 0.929 |
| Example 12 | SiTiNb | 0.50 | | | | 0.25 | | 0.25 | 0.929 |
| Example 13 | SiPSr | 1.0 | | 0.25 | | | 1.0 | | 0.923 |
| Comparative Example 7 | AlSrSb | | 0.25 | 0.25 | 0.25 | | | | 0.919 |
| Comparative Example 8 | SrSbNb | | | 0.25 | 0.25 | 0.25 | | | 0.916 |

**[Table 4]**

| | Added element | Amount of Ti and M added (mol%) | | | | | | | | | Capacity maintenance rate |
|---|---|---|---|---|---|---|---|---|---|---|---|
| | | Si | Al | Co | P | Sb | Sr | Ti | Mg | Nb | |
| Example 14 | SiAlSrTi | 0.50 | 1.0 | | | | 0.50 | 1.0 | | | 0.944 |
| Example 15 | SiAlTiMg | 0.50 | 1.0 | | | | | 1.0 | 0.50 | | 0.941 |
| Example 16 | SiAlPTi | 0.50 | 1.0 | | 0.50 | | | 1.0 | | | 0.939 |
| Example 17 | SiAlTiNb | 0.50 | 1.0 | | | | | 1.0 | | 0.50 | 0.938 |
| Comparative Example 9 | AlCoSbP | | 0.50 | 0.75 | 0.25 | 0.25 | | | | | 0.926 |
| Comparative Example 10 | AlCoSbP | | 0.50 | 0.50 | 0.25 | 0.25 | | | | | 0.929 |
| Comparative Example 11 | AlCoSbP | | 0.50 | 0.25 | 0.25 | 0.25 | | | | | 0.924 |
| Comparative Example 12 | AlSbPTi | | 1 | | 0.5 | 0.5 | | 1 | | | 0.929 |

As shown in Table 1, the test cells of Examples 1 and 2 have higher capacity maintenance rates and more excellent cycle characteristics than the test cells of Comparative Examples 1 and 2. Adding F to a lithium-transition metal composite oxide containing Mn and Ni improves the capacity maintenance rate of the test cell in which the oxide is used, but the effect of improving the capacity maintenance rate is smaller than the effect in the case of using a composite oxide to which Si is added. The test cell of Example 1 also has more excellent cycle characteristics than the test cells in the case of using a composite oxide to which Co is added instead of Si (Comparative Examples 3 and 4).

As shown in Tables 2 to 4, the capacity maintenance rate of the test cell is greatly improved by using a lithium-transition metal composite oxide in which greater than or equal to 1 and less than or equal to 3 kinds of elements M are added in addition to Si, and thus the cycle characteristics can be more effectively improved. In particular, a particularly remarkable improvement effect was obtained in a combination of two kinds of specific elements M and in a combination of three kinds of specific elements M.

In Examples, Al, P, Sb, Sr, Ti, Mg, and Nb were used as the element M. However, it is estimated that an effect of improving durability can be obtained even in the case of using, in addition to or in place of these elements, Na, K, Ca, Ba, Sc, Y, La, Ce, Pr, Nd, Sm, Eu, Gd, Tb, Dy, Ho, Er, Tm, Yb, Lu, Ge, Sn, Pb, Sc, V, Cr, Fe, Cu, Zn, Ru, Rh, Re, Pd, Ir, Ag, Bi, B, Ga, In, Zr, Hf, Mo, and W.

### REFERENCE SIGNS LIST

- 10: Non-aqueous electrolyte secondary battery
- 11: Positive electrode
- 12: Negative electrode
- 13: Separator
- 14: Electrode assembly
- 16: Exterior housing can
- 17: Sealing assembly
- 18, 19: Insulating plate
- 20: Positive electrode lead
- 21: Negative electrode lead
- 22: Groove portion
- 23: Internal terminal plate
- 24: Lower vent member
- 25: Insulating member
- 26: Upper vent member
- 27: Cap
- 28: Gasket

## Claims

1. A positive electrode active material for non-aqueous electrolyte secondary batteries, the positive electrode active material comprising a lithium-transition metal composite oxide having a composition formula of LiₓMn_{y}Ni_{z}SiₐM_{f}O_{2-α}F_{α} wherein M is at least one element selected from Na, K, Mg, Ca, Sr, Ba, Sc, Y, La, Ce, Pr, Nd, Sm, Eu, Gd, Tb, Dy, Ho, Er, Tm, Yb, Lu, Ge, Sn, Pb, Sc, Ti, V, Cr, Fe, Co, Cu, Zn, Ru, Rh, Re, Pd, Ir, Ag, Bi, Sb, B, Al, Ga, In, P, Zr, Hf, Nb, Mo, and W, and x + y + z + a + f ≤ 2 + A, 1.0 < x ≤ 1.2, 0.4 ≤ y ≤ 0.8, 0 ≤ z ≤ 0.4, 0 < a ≤ 0.03, 0 ≤ f ≤ 0.05, 0 < α ≤ 0.1, and 0 ≤ A ≤ 0.03 are satisfied.

2. The positive electrode active material for non-aqueous electrolyte secondary batteries according to claim 1, wherein
in the composition formula of LiₓMn_{y}Ni_{z}SiₐM_{f}O_{2-α}F_{α},
M is at least two elements selected from Na, K, Mg, Ca, Sr, Ba, Sc, Y, La, Ce, Pr, Nd, Sm, Eu, Gd, Tb, Dy, Ho, Er, Tm, Yb, Lu, Ge, Sn, Pb, Sc, Ti, V, Cr, Fe, Co, Cu, Zn, Ru, Rh, Re, Pd, Ir, Ag, Bi, Sb, B, Al, Ga, In, P, Zr, Hf, Nb, Mo, and W, and f representing a molar ratio of M satisfies 0 < f ≤ 0.03.

3. The positive electrode active material for non-aqueous electrolyte secondary batteries according to claim 2, wherein
in the composition formula of LiₓMn_{y}Ni_{z}SiₐM_{f}O_{2-α}F_{α},
M is at least two elements selected from Al, P, Sb, Sr, Ti, Nb, and Mg.

4. The positive electrode active material for non-aqueous electrolyte secondary batteries according to any one of claims 1 to 3, wherein
in the composition formula of LiₓMn_{y}Ni_{z}SiₐM_{f}O_{2-α}F_{α},
a representing a molar ratio of Si satisfies 0.002 ≤ a ≤ 0.015.

5. A non-aqueous electrolyte secondary battery comprising:
a positive electrode including the positive electrode active material according to any one of claims 1 to 4;
a negative electrode;
a separator interposed between the positive electrode and the negative electrode; and
a non-aqueous electrolyte.
